# EUROPEAN PATENT SPECIFICATION

(11) **EP 3 719 959 B1**
(45) Date of publication and mention of the grant of the patent: **09.06.2021**
(21) Application number: 19466001.5
(22) Date of filing: 03.04.2019
(51) Int. Cl.: H02K 1/27, H02K 1/30, H02K 9/06

(54) **BRUSHLESS MOTOR ROTOR**
ROTOR EINES BÜRSTENLOSEN MOTORS
ROTOR DE MOTEUR SANS BALAI

(43) Date of publication of application: 07.10.2020
(73) Proprietor: Bohumil, Mrázek, 793 26 Vrbno pod Pradedem (CZ)
(72) Inventor: Bohumil, Mrázek, 793 26 Vrbno pod Pradedem (CZ)
(74) Representative: Soukup, Petr

(56) References cited:
- EP-A1- 3 208 913
- FR-A1- 3 056 846
- JP-A- S57 180 341

## Description

### Field of technology

The present invention falls within the field of dynamoelectric machine design and relates to a brush less electric rotor.

### State-of-the-art

In the operation of electric motors, these machines produce a considerable amount of heat, which can cause their overheating, thereby reducing their performance and efficiency. This problem is particularly significant in brushless electric motors with permanent ultra-strength neodymium magnets, whose efficiency significantly decreases with increasing temperature and is considerably reduced at temperatures around 80°C. Various methods of cooling individual parts of the electric motor are described, where cooling of the outer stator is easily feasible, for example by ribbing or various channels leading to the outside, using a fan and similar.

The cooling of the rotor can be accomplished by driving the cooling medium in the space between the stator and the rotor, which is considerably restrictive in terms of environment in which such a motor would be useful, especially due to the possible contamination of the internal working environment of the machine. This can be solved by using a filter or a closed cooling circuit connected to the external environment by means of a heat exchanger, a cooler as described e.g. in file no. US2862121A. Such a solution greatly complicates the design of the machine, increases its weight and production costs, thereby also limiting its use. If the internal components of the electric motor are to be completely isolated from the external environment, the rotor can be cooled by a medium running through the inner space of the rotor body where the refrigerant does not come into contact with the internal working space of the motor. File US2002/0195887 describes the cooling of rotary electrical machine by flowing a coolant through a hollow shaft on which magnetised steel plates are placed, laminated in the direction of the rotational axis of the shaft, wherein the through-going cavity extends axially, being coaxial with the rotational axis of the shaft. However, the system is designed for liquid cooling and is not suitable for air cooling. US6707180 presents a rotor cooling design with an internal cavity through which the cooling medium enters the rotor shaft by a coaxially formed inlet opening, wherein the internal cavity has a considerably larger cross section than the inlet opening, and exits on the opposite side through an outlet with corresponding dimensions. The shape of the internal cavity is adapted to produce backward and lateral streams of cooling fluid to improve cooling efficiency, alternatively the internal cavity is fitted with lamellas to ensure circulation. However, this solution requires an additional source of coolant and the cooling efficiency is further limited by the small cross section of the inlet and outlet openings in the hollow shaft.

In the case of brushless motors with permanent magnets, which can also be used in highly polluting environments, and where the inner parts are required to be sealed, the cooling of the rotor is a considerable problem. In US2003/0132673 the cooling of the rotor is solved by a hollow shaft and the rotor body incorporates axially extending channels in which the coolant flows. Nevertheless, this design is intended for liquid cooling, the internal, cross sections of the channels are insufficient for air cooling and the design requires a source of coolant circulation. A similar design with a hollow shaft is described in US2009/0261667, where the coolant is fed at one end into a hollow shaft from which it is driven into the channels provided in the rotor body first radially, then into the axial channels and then back in the radial direction back into the hollow the shaft from which it escapes. Here again, the limiting factor is the small internal cross section of the hollow shaft and the need for a source of coolant circulation. Cooling through a hollow shaft is also the subject matter of the invention disclosed in US2015/0069861, where a tube-like distribution element is provided in the coaxial shaft cavity fitted with longitudinal axially extending ribs on its surface and on one end a flat element with radial ribs protrudes from the hollow shaft in the radial direction. By rotating the distribution element, air flows through the hollow shaft, the air is sucked along the axis of the tubular distribution element, is driven to the end of the internal shaft cavity, and then it flows in the opposite direction through the shaft around the external surface of the distribution element out of the shaft from where it is driven out of the motor by the flat element with radial ribs. In this design, the cooling efficiency is limited by the shaft internal cross section, and the system requires the presence of a rotating distributor, which increases machine complexity, weight and production costs. JP2014166018 describes the cooling of the hollow shaft, where the coolant is driven in through one end; after passing through the shaft, it is discharged from the shaft by radial channels through the centrifugal member downstream of the motor. The narrow inner cross-section of the shaft and the channels is a factor that greatly limits the efficiency of the internal cooling of the rotor. CN204967451 discloses a design of rotor housing with a rotating shaft which is fitted with air passageways in the axial direction, the internal cross section of which is low with respect to the rotor body cross section, thereby greatly limiting the cooling efficiency. Although the two rotor faces are provided with spiral guiding elements that suck or extract the cooling air towards/from the ventilation channels, but their efficiency is questionable. Further, the cooling of rotor permanent magnets is presented in CA2972225, in which the rotor body is provided with an internal cavity into which the cooling air is driven through axial openings provided in the rotor faces. From the internal cavity, the cooling air is driven through radially oriented openings provided in the exterior wall of the rotor body between the magnets, i.e. into the working space of the electric motor, which limits the applicability of this design in a clean environment. Rotor cooling through a hollow shaft is also described in US20170237316. In this design, the shaft is provided with a through-going cavity in the axial direction, extended in the area of the rotor body, where in this extension a cooling body is provided with longitudinal ribs for dissipating heat from the rotor body forming coolant passageways in the inner shaft cavity. Nevertheless, due to the volume of the rotor body, the shaft cavity is too small to remove more heat. In the file EP3208913A1 is described a rotor of the electric engine with permanent magnets. This rotor if formed by a cylindrical carrier body in the shape of a pot with a coaxial inner cavity which is opened only in one axial direction. This opening is provided by an inlet opening with the same cross-section as the cross-section of the inner cavity of the cylindrical carrier body. On surface of a cylindrical housing of this carrier body are placed permanent electromagnets. Cooling is provided through channels designed in the housing of the carrier body of the rotor in axial direction with inlet openings in the front face of the carrier body around the inlet opening of the inner cavity. The channels are then directed to opposite side of the carrier body of the rotor to a widened rim with bigger diameter.

A similar hollow rotor of electro engine with permanent electromagnets which is opened in one axial direction is described in the file FR3056846A1, where, however, in the cylindrical body of the rotor are not any cooling channels, only in the front face of the body of the rotor are around its axis of rotation made openings for outflow of heat from a bearing which is placed in the cavity of the rotor, which, however, do not have any cooling capacity with regard to the permanent magnets which are placed from the outside, in cylindrical housing of the body of the rotor.

It is a target of the present invention to provide a new electric motor rotor design with an improved permanent magnet air cooling system that can be used in very heavily polluted environments while being structurally simple and feasible in terms of production.

### Principle of the invention

The invention is a rotor for a brushless motor as defined in the independent claim 1. Further embodiments of the invention are defined in dependent claim 2. The objective is achieved by the invention, which is a rotor for a brushless electric motor, suitable for being supported on bearings in a stator cavity coaxially with the stator, where the stator is seated in the inner cavity of the housing and where the outer surface of the rotor (3) carrier body (31) adjoins the magnetic part (32), shaped like a ring inserted on the carrier body (31), between the rotor (3) inlet end area (311) and the rotor (3) outlet end area (312) where this magnetic part is fitted with at least two evenly distributed permanent magnets (321) on its outer circumference. The rotor is formed by a hollow cylindrical carrier body with a coaxial cylindrical rotor cavity that is open towards the rotor inlet end area into the external area through the inlet opening, which has the same diameter as the inside diameter of the rotor cavity where at least two axially oriented longitudinal recess-shaped draining channels are formed in the inner surface of the rotor cavity in the part facing the rotor end area. Here, the circle circumscribed by the outer contour of the cross-section thereof has a diameter greater than the diameter of the rotor cavity, while the draining channels are directed into the outlet vents which are provided in the outlet end area of the rotor in the axial direction evenly around the rotor rotation axis and are guided from the rotor cavity to the exterior.

The projection of the cross-section of the outlet vents to a plane perpendicular to the rotational axis of the rotor includes on the one hand, a projection of the cross-section of the draining channels in that plane and, secondly, extends to the projection of the cross-section of the rotor cavity in the same plane.

It is also advantageous if the rotor is provided with a pinion in its rotational axis in its outlet end area. The pinion is fitted with at least two axially running recesses extending evenly along the circumference of the pinion.

In another preferred design, the pinion is fitted with a flat venting element in the plane perpendicular to the rotational axis of the rotor. The element is provided with at least two ventilation vanes fitted in the radial direction in planes passing through the rotational axis of the rotor.

Furthermore, it is advantageous if the bearings are seated ring-wise in the inlet end area of the rotor and the outlet end area of the rotor and also fixed in the front face and the rear face that adjoin both end parts of the housing.

The present invention achieves a new and higher effect as the efficient cooling is provided by supplying the cooling air to the rotor body through an opening of the same cross-section as the inner cavity of the rotor, and a sufficiently strong flow prevents formation of dirt deposits inside the rotor cavity.

### Drawings

Specific examples of the invention design are shown in the accompanying drawings which present:
- Fig.1: overall axonometric view of the brushless electric motor from the outlet end area,
- Fig.2: axonometric exploded view of the brushless electric motor from its outlet end area,

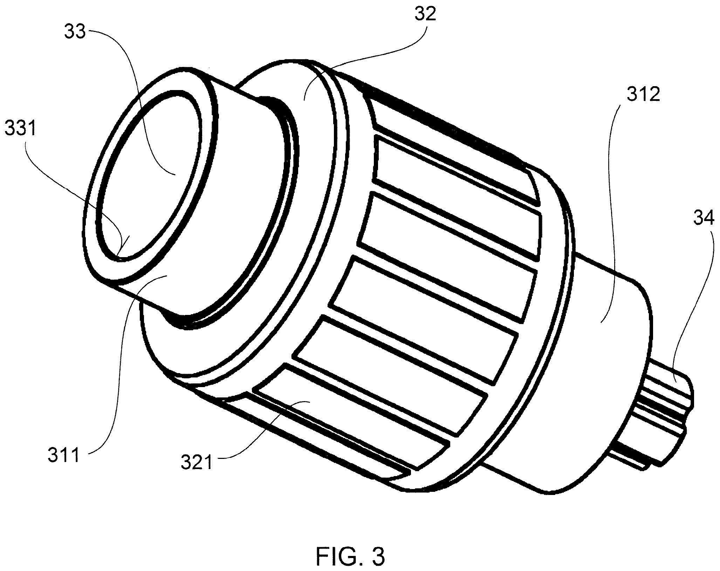

- Fig.3: axonometric view of the rotor from its inlet end area,

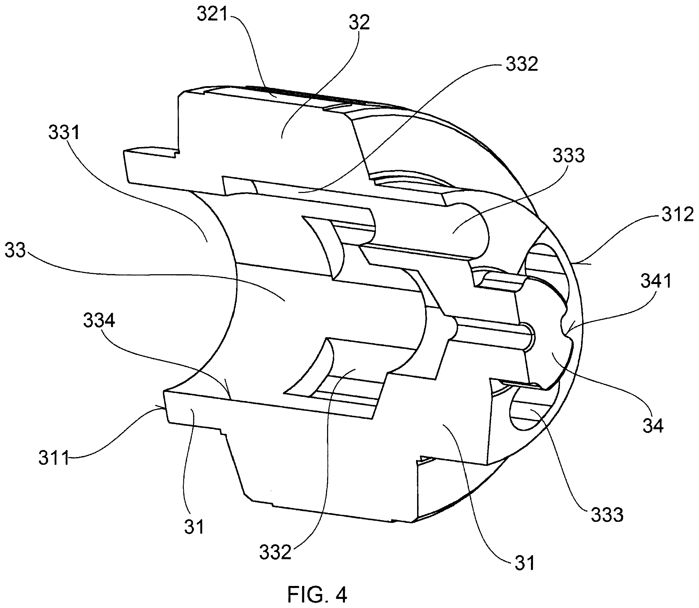

- Fig.4: cross-section view of the brushless motor rotor,

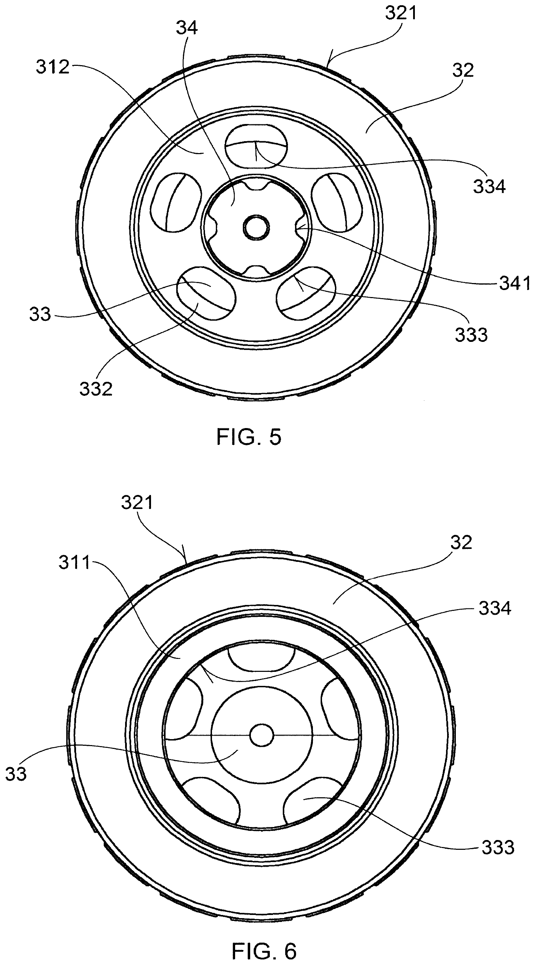

- Fig.5: front view of the rotor from its outlet end area,
- Fig.6: front view of the rotor from its inlet end area,

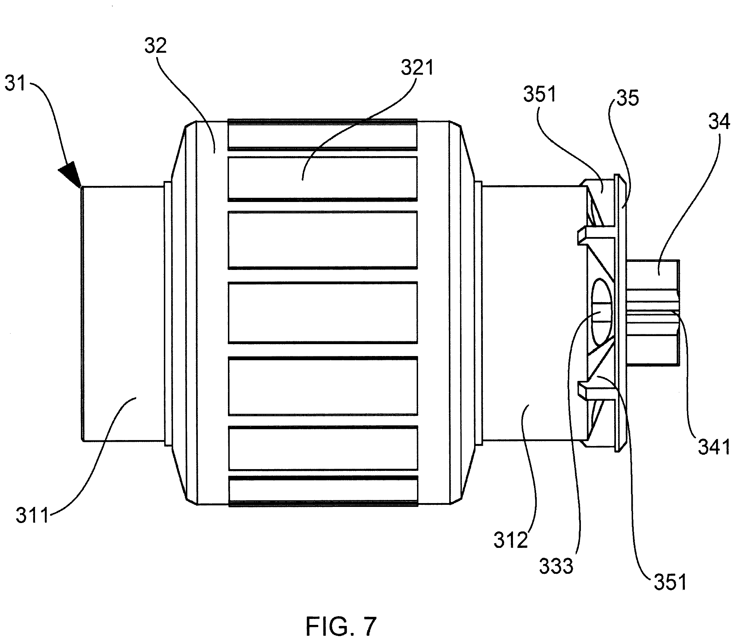

- Fig.7: side view of the preferred design of the rotor with the venting element attached;

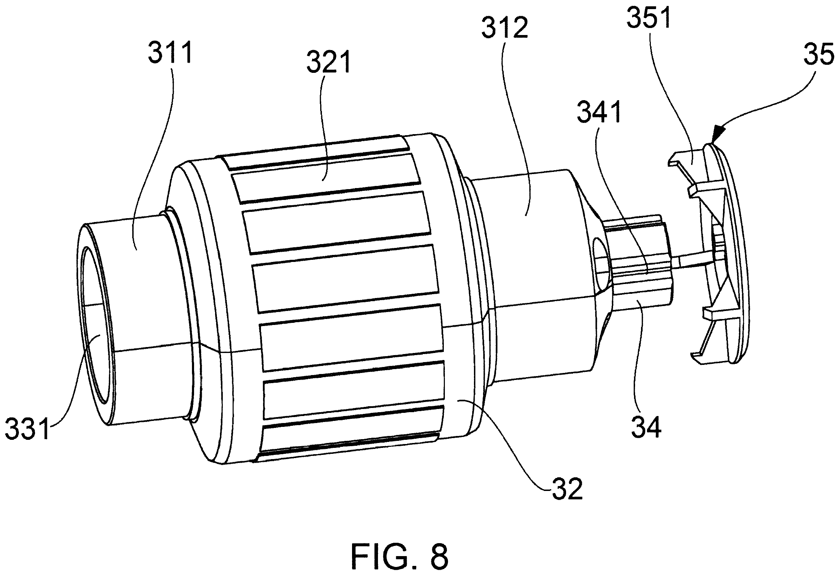

- Fig.8: axonometric view of the rotor and the venting element from the inlet end area,

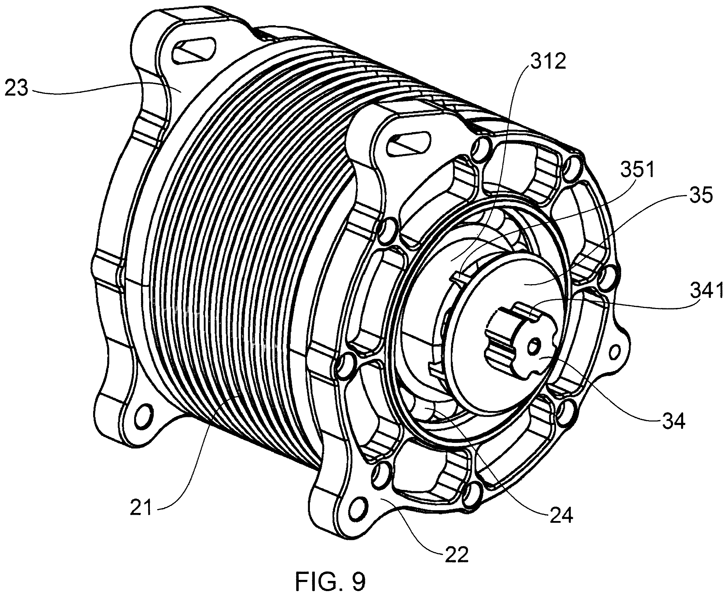

- Fig.9: overall axonometric view of the preferred design of the brushless electric motor with the venting element on the side of its outlet area.

The drawings illustrating the present invention and the following examples of a particular design do not in any way limit the scope of protection, but merely illustrate the principle of the invention. The scope of protection is defined in the claims.

### Examples of the invention designs

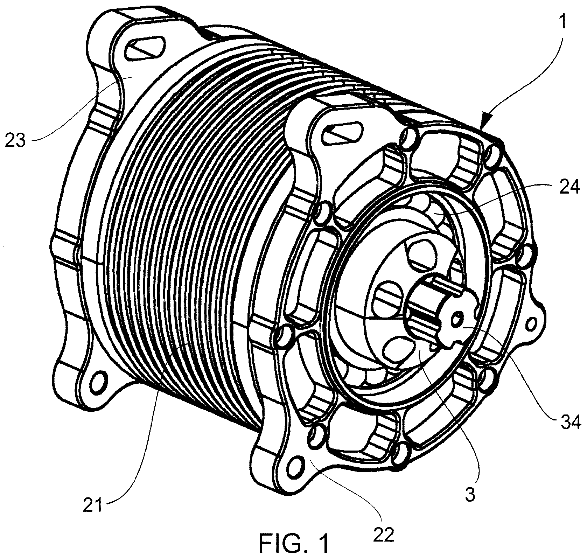

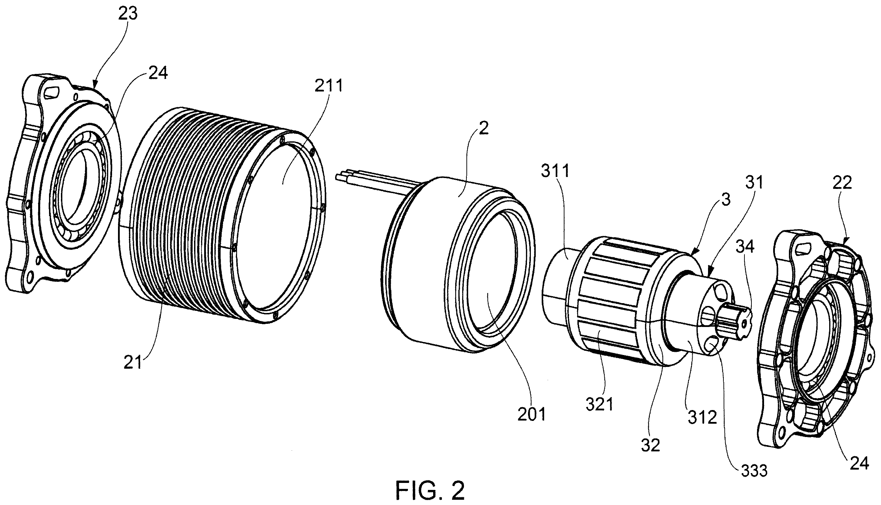

The rotor as presented in the invention is a basic part of the brushless electric motor 1 illustrated in Fig. 1 and Fig. 2. The electric motor 1 consists of a stator 2 in the shape of a hollow cylinder that can be disassembled and is coaxially mounted in the cylindrical inner cavity 211 of the housing 21. Both end areas of the housing 21 adjoin to the front face 22 and rear face 23, in which there are bearings 24 seated in planes perpendicular to the rotational axis of the stator 2. The common rotary axis of the bearings is identical to the stator rotational axis 2. Using the bearings 24, the rotor 3 is placed in the stator cavity 201 coaxially with the stator 2. The rotor inlet end area 311 and outlet end area 312 incorporates bearings 24 that are fitted ring-wise.

Rotor 3 consists of a carrier body 31 in the shape of a hollow cylinder with a ringshaped magnetic part 32 adjoining its outer surface. The magnetic part is slid on the carrying body 31 between the inlet end area 311 of the rotor 3 and the outlet end area 312 the rotor 3. The magnetic part 32 is fitted with at least two evenly distributed permanent magnets 321 around its circumference. In the carrier body 31 of the rotor 3, a coaxial cylindrical rotor cavity 33 is evenly spaced around the rotor rotational axis 3. The cavity is open towards the inlet end area 311 of the rotor 3 and it leads to the outer area through the inlet opening 331, which has the same diameter as the inside diameter of the rotor cavity 33. In the inner surface 334 of the rotor cavity 33 there are in its part facing the exit area 312 at least two axially oriented draining channels 332 formed uniformly around its circumference in the shape of a longitudinal recesses where the circle circumscribed by the outer contour of their cross-section has a diameter greater than the diameter of the rotor cavity 33. The draining channels 332 flow into the outlet vents 333, which are made in the outlet end area 312 of the rotor 3 in the axial direction evenly distributed around the rotor rotational axis 3 and they lead from the rotor cavity 33 into the outer area. The projection of their cross-section to a plane perpendicular to the rotational axis of the rotor 3 includes the projection of the cross-section of the draining channels 332 into this plane as well as the projection of the cross-section of the rotor cavity to the same plane. The rotor 3 is provided with a pinion 34 in its rotational axis 3 in its outlet end area 312. The pinion is fitted with at least two axially running recesses 341 extending evenly along the circumference of the pinion 34.

In another preferred design, the pinion 34 is fitted with a flat venting element in the plane perpendicular to the rotational axis 3 of the rotor. The element is maintained in a constant position against the pinion 34 by means of the pinion notches 341. The element 35 is provided with at least two ventilation vanes 351 fitted in the radial direction in planes passing through the rotational axis of the rotor 3.

### Industrial usability

The rotor for a brushless motor can be primarily used for driving two-wheeled vehicles, even in highly polluted environments.

## Claims

1. The rotor (3) for a brushless electric motor (1), suitable for being supported by bearings (24) in the stator cavity (201) coaxially with the stator (2), where the stator (2) is seated in the inner cavity (211) of the housing (21) and where the outer surface of the rotor (3) carrier body (31) adjoins the magnetic part (32), shaped like a ring inserted on the carrier body (31), between the rotor (3) inlet end area (311) and the rotor (3) outlet end area (312) where this magnetic part is fitted with at least two evenly distributed permanent magnets (321) on its outer circumference, wherein the rotor (3) is formed by a hollow cylindrical carrier body (31) with a coaxial cylindrical rotor cavity (33) with the carrier body (31) distributed evenly around the rotor (3) rotational axis, the cavity is open towards the rotor (3) inlet end area (311) into the external area through the inlet opening (331), which has the same diameter as the inside diameter of the rotor cavity (33) **characterized in that** at least two axially oriented longitudinal recess-shaped draining channels (332) are formed in the inner surface (334) of the rotor cavity (33) in the part facing the rotor (3) outlet end area (312), wherein the circle circumscribed by the outer contour of the cross-section thereof has a diameter greater than the diameter of the rotor cavity (33), while the draining channels (332) are directed into the outlet vents (333) which are provided in the outlet end area (312) of the rotor (3) in the axial direction evenly around the rotor (3) rotation axis and are guided from the rotor cavity (33) to the exterior and further the projection of the cross-section of the outlet vents (333) to a plane perpendicular to the rotational axis of the rotor (3) includes on the one hand, a projection of the cross-section of the draining channels (332) **in that** plane and, secondly, extends to the projection of the cross-section of the rotor cavity (33) in the same plane.

2. The rotor (3) according to Claim 1 **characterized in that** its rotational axis is provided with a pinion (34) in its outlet end area (312), wherein the pinion is fitted with at least two axially running recesses (341) extending evenly along the circumference of the pinion (34), whereby the pinion (34) is fitted with a flat venting element (35) in the plane perpendicular to the rotational axis of the rotor (3), wherein the element is provided with at least two ventilation vanes (351) fitted in the radial direction in planes passing through the rotational axis of the rotor (3).

## Patentansprüche

1. Der Rotor (3) für einen bürstenlosen Elektromotor (1), der zur Lagerung durch Lager (24) im Statorhohlraum (201) koaxial zum Stator (2) geeignet ist, wobei der Stator (2) im Innenhohlraum (211) des Gehäuses (21) sitzt und die Außenfläche des Trägerkörpers (31) des Rotors (3) an den Magnetteil (32) angrenzt, der wie ein am Trägerkörper (31) eingesetzter Ring geformt ist, zwischen dem Einlassendbereich (311) des Rotors (3) und dem Auslassendbereich (312) des Rotors (3), in dem dieser magnetische Teil an seinem Außenumfang mit mindestens zwei gleichmäßig verteilten Permanentmagneten (321) versehen ist, wobei der Rotor (3) aus einen hohlen zylindrischen Trägerkörper (31) mit einem koaxialen zylindrischen Rotorhohlraum (33) besteht, wo der Trägerkörper (31) gleichmäßig um die Rotationsachse des Rotors (3) verteilt ist, der Hohlraum zum Einlassendbereich (311) des Rotors (3) hin und in den Außenbereich durch die Einlassöffnung (331) offen ist, die den gleichen Durchmesser hat wie der Innendurchmesser des Rotorhohlraums (33), der sich **dadurch auszeichnet,** dass mindestens zwei axial ausgerichtete, in Längsrichtung vertiefte Abflusskanäle (332) in der Innenfläche (334) des Rotorhohlraums (33) in dem den Auslassendbereich (312) des Rotors (3) zugewandten Teil ausgebildet sind, wobei der durch die Außenkontur seines Querschnitts umschriebene Kreis einen Durchmesser hat, der größer als der Durchmesser des Rotorhohlraums (33) ist, während die Abflusskanäle (332) in die Auslassöffnungen (333) gerichtet sind, die im Auslassendbereich (312) des Rotors (3) in Axialrichtung gleichmäßig um die Rotationsachse des Rotors (3) vorgesehen und vom Rotorhohlraum (33) nach außen geleitet sind, und wobei weiter die Projektion des Querschnitts der Auslassöffnungen (333) zu einer Ebene senkrecht zur Rotationsachse des Rotors (3) einerseits eine Projektion des Querschnitts der Abflusskanäle (332) in derselben Ebene umfasst und zweitens sich zur Projektion des Querschnitts des Rotorhohlraums (33) in derselben Ebene erstreckt.

2. Der Rotor (3) nach Anspruch 1 ist **dadurch gekennzeichnet, dass** seine Rotationsachse in seinem Auslassendbereich (312) mit einem Ritzel (34) ausgestattet ist, wobei das Ritzel mit mindestens zwei axial verlaufenden Aussparungen (341) versehen ist, die sich gleichmäßig entlang des Umfangs des Ritzels (34) erstrecken, wobei das Ritzel (34) mit einem flachen Entlüftungselement (35) in der Ebene senkrecht zur Rotationsachse des Rotors (3) versehen ist, und das Element mit mindestens zwei Belüftungsflügeln (351) ausgestattet ist, die in Radialrichtung in Ebenen angebracht sind, die durch die Rotationsachse des Rotors (3) verlaufen.

## Revendications

1. Le rotor (3) pour un moteur électrique sans balais (1), adapté pour être supporté par des roulements (24) dans la cavité (201) du stator coaxialement au stator (2), où le stator (2) est logé dans la cavité interne (211) du boîtier (21) et où la surface extérieure du corps de support (31) du rotor (3) est contiguë à la partie magnétique (32), en forme d'anneau inséré sur le corps de support (31), entre la zone d'extrémité d'entrée (311) du rotor (3) et la zone d'extrémité de sortie (312) du rotor (3) où cette partie magnétique est équipée d'au moins deux aimants permanents (321) uniformément répartis sur sa circonférence externe, le rotor (3) étant formé par un corps porteur cylindrique creux (31) avec une cavité de rotor cylindrique coaxiale (33) avec le corps porteur (31) réparti uniformément autour de l'axe de rotation du rotor (3), la cavité est ouverte vers la zone d'extrémité d'entrée (311) du rotor (3) dans la zone externe par l'ouverture d'entrée (331), qui a le même diamètre que le diamètre intérieur de la cavité de rotor (33) **caractérisée en ce qu'**au moins deux canaux de drainage longitudinaux orientés axialement en forme d'évidement (332) sont formés dans la surface intérieure (334) de la cavité de rotor (33) dans la partie faisant face à : la zone d'extrémité de sortie (312) du rotor (3), dans lequel le cercle circonscrit par le contour extérieur de sa section transversale a un diamètre supérieur au diamètre de la cavité du rotor (33), tandis que les canaux de drainage (332) sont dirigés dans les évents de sortie (333) qui sont prévus dans la zone d'extrémité de sortie (312) du rotor (3) dans la direction axiale uniformément autour de l'axe de rotation du rotor (3) et sont guidés de la cavité du rotor (33) vers l'extérieur et en outre la projection de la section transversale des évents de sortie (333) à un plan perpendiculaire à l'axe de rotation du rotor (3) comprend d'une part, une projection de la section transversale des canaux de drainage (332) dans ce plan et, d'autre part, s'étend jusqu'à la projection de la section transversale de la cavité du rotor (33) dans le même plan.

2. Le rotor (3) selon la revendication 1, **caractérisé en ce que** son axe de rotation est pourvu d'un pignon (34) dans sa zone d'extrémité de sortie (312), dans lequel le pignon est équipé d'au moins deux évidements (341) s'étendant uniformément le long de la circonférence du pignon (34), le pignon (34) étant équipé d'un élément de ventilation plat (35) dans le plan perpendiculaire à l'axe de rotation du rotor (3), dans lequel l'élément est pourvu d'au moins deux ventilations des aubes (351) montées dans la direction radiale dans des plans passant par l'axe de rotation du rotor (3).
